## Europäisches Patentamt
## European Patent Office
## Office européen des brevets

(19)

(11) Numéro de publication: **0 197 073**

**B1**

(12)

# FASCICULE DE BREVET EUROPÉEN

(45) Date de publication du fascicule du brevet:
**10.05.89**

(51) Int. Cl.⁴: **B 65 D 17/50**, B 65 B 7/00

(21) Numéro de dépôt: **85904788.8**

(22) Date de dépôt: **07.10.85**

(86) Numéro de dépôt international:
**PCT/CH 85/00147**

(87) Numéro de publication internationale:
**WO 86/02055 (10.04.86 Gazette 86/08)**

(54) **EMBALLAGE ETANCHE, PROCEDE DE FABRICATION ET UTILISATION DE CET EMBALLAGE.**

(30) Priorité: **05.10.84 FR 8415439**
**18.03.85 FR 8504078**

(43) Date de publication de la demande:
**15.10.86 Bulletin 86/42**

(45) Mention de la délivrance du brevet:
**10.05.89 Bulletin 89/19**

(84) Etats contractants désignés:
**AT BE CH DE FR GB IT LI LU NL SE**

(56) Documents cité:
**CH-A-587 744**
**DE-A-1 808 743**
**FR-A-1 424 292**
**FR-A-2 044 060**
**FR-A-2 108 873**
**FR-A-2 267 946**
**US-A-3 272 366**
**US-A-3 403 810**
**US-A-3 516 852**
**US-A-3 615 034**
**US-A-4 009 793**

(73) Titulaire: **COD INTER TECHNIQUES SA, 16, rue Albert Gos, CH- 1206 Genève (CH)**

(72) Inventeur: **HORVATH, Laszlo, 51, route de Frontenex, CH- 1207 Genève (CH)**

(74) Mandataire: **Nithardt, Roland, CABINET ROLAND NITHARDT Attn: Cabinet MOSER & CIE Rue Edouard Verdan 15, CH- 1400 Yverdon- les- Bains (CH)**

LIBER, STOCKHOLM 1989

## Description

La présente invention concerne un emballage étanche comportant un récipient composé d'une ouverture et d'un couvercle réalisés en un matériau synthétique moulé, souffle ou thermoformé les faces externes de ce récipient et de ce couvercle étant constituées par une matière thermoplastique et présentant des surfaces cylindriques situées dans le prolongement l'une de l'autre, et une bande amovible souple scellée sur lesdites surfaces cylindriques pour fixer le couvercle au récipient, ladite bande souple ayant une structure multicouche présentant une couche intérieure constituée par une matière thermoplastique soudable à ladite matière synthétique et au moins une couche barrière intermédiaire constituée par une matière imperméable aux gaz et aux vapeurs, et étant soudée au récipient et au couvercle le long de deux plages de soudure parallèles en forme de boucles fermées s'étendant sans discontinuité sur lesdites surfaces cylindriques. Elle concerne également un procédé de fabrication de cet emballage.

La demande de brevet français publiée sous le No. 2 267 946 décrit une boîte métallique à couvercle amovible qui est rendue étanche au moyen d'un ruban adhésif qui assure la liaison entre le couvercle et le récipient. L'étanchéité obtenue est très relative et ne satisfait pas aux conditions de conservation de longue durée de produits pouvant s'avarier tels que denrées alimentaires, par exemple des légumes précuits, des plats cuisinés etc... Les exigences en matière de conservation de longue durée sont particulièrement sévères. L'utilisation d'un ruban adhésif pour relier le couvercle au récipient ne permet pas de remplir ces exigences.

Le brevet français publié sous le No. 2 044 060 décrit un emballage en matière synthétique à couvercle amovible qui est également rendu étanche par une bande souple adhésive obturant la fente localisée entre le couvercle et le récipient. Comme mentionné précédemment, un simple ruban adhésif ne permet pas d'atteindre les conditions requises pour garantir une conservation de longue durée.

Le brevet américain No. US-A-3 403 810 décrit un emballage étanche comportant un récipient composé d'une ouverture et d'un couvercle réalisés en un matériau synthétique, les faces externes de ce récipient et de ce couvercle présentant des surfaces cylindriques situées dans le prolongement l'une de l'autre. Le récipient et le couvercle sont liés par une bande souple réalisée en un matériau multicouche, soudée le long de deux plages de soudure parallèles en forme de boucles fermées.

Le brevet américain No. US-A-3 516 852 décrit un emballage similaire à celui décrit dans le brevet US mentionné ci-dessus, mais dans lequel la bande amovible souple comporte une couche additionnelle constituée par une matière non soudable.

Parmi les autres emballages étanches connus, les plus récemment développés comportent un récipient rigide réalisé en un matériau synthétique thermoformable multicouche présentant une barrière de diffusion de l'oxygène et de la vapeur d'eau, et un couvercle soudé sur un rebord plan du récipient. Le couvercle est habituellement réalisé en une feuille d'aluminium souple constituant une telle barrière revêtue d'un film d'une substance thermoscellable pouvant être soudé sur le bord du récipient. Ce type d'emballage est souvent, mais non exclusivement, utilisé pour contenir des produits alimentaires, notamment des préparations culinaires.

Un de ses inconvénients est du au fait que le couvercle ne peut plus être utilisé après avoir été retiré du récipient, et l'emballage ne peut donc plus être refermé lorsqu'il a été ouvert une première fois.

Un autre inconvénient de ce type d'emballage est qu'en raison des résidus inévitables du couvercle qui restent attachés au récipient après son ouverture, il se prête mal à une utilisation en place d'assiette permettant la consommation des éléments contenus dans le récipient.

Un autre inconvénient de ce type d'emballage provient de la faible sécurité qu'offre la plage de soudure annulaire le long de laquelle le couvercle est fixé au récipient. Le moindre défaut de cette soudure provoqué par exemple par une particule ou une fibre alimentaire traversant la plage de soudure, constitue une faille dans cette zone de fermeture, qui risque d'engendrer une contamination éventuellement dangereuse des produits contenus dans l'emballage.

En outre, le couvercle est relativement fragile et les risques de décrirure en cours de stockage ou de manipulations ne sont pas négligeables. Cet inconvénient se retrouve, encore aggravé, dans certains emballages dont le récipient est lui aussi réalisé en une feuille d'aluminium souple revêtue d'un film d'une substance thermoscellable.

Ce dernier inconvénient à trouvé un remède dans le remplacement du couvercle ou opercule en aluminium thermoscellable par un couvercle réalisé comme le récipient en un matériau synthétique thermoformable multicouche suffisamment épais et rigide pour supporter des chocs ou des pressions plus importantes. Ces couvercles nécessitent toutefois un temps plus long pour pouvoir être soudés sur le rebord plan du récipient et leur ouverture plus difficile, ne peut s'effectuer qu'à l'aide d'un utensile spécial.

En outre, comme pour les couvercles-opercules, ils ne peuvent pas être utilisés comme assiette ni réutilisés et la zone de soudure ne présente pas toujours la sécurité voulue pour préserver le contenu de l'emballage contre toute contamination comme expliqué précédemment.

La présente invention se propose de pallier tous ces différents inconvénients en réalisant un emballage étanche de conception simple, susceptible d'être fabriqué en grande série de façon économique et se prêtant à de multiples utilisations dans des domaines très varies.

Dans ce but, l'emballage selon l'invention est caractérisé en ce que ses surfaces cylindriques sont pourvues chacune en un point de leur pourtour à'un bec protubérant vers l'extérieur et formant chacun une arête, ces becs étant disposés de telle manière que leurs arêtes soient situées dans le prolongement l'une de l'autre, perpendiculairement à l'axe de la bande souple et en ce que les deux tronçons d'extrémité de cette bande souple sont soudés dos à dos à l'extrémité desdites arêtes.

Selon une forme de réalisation particulière, le couvercle est lié au récipient par une liaison annulaire de leurs parois, la zone de liaison étant délimitée par une entaille périphérique séparant lesdites surfaces cylindriques et interrompue par une liaison locale, ladite liaison locale étant constituée par un carreau dont les deux faces sont revêtues d'un matériau soudable à ladite matière thermoplastique revêtant les faces externes du récipient et du couvercle, ce carreau étant soudé sur lesdites surfaces cylindriques du récipient et du couvercle.

Le carreau est avantageusement soudé sur des sabots juxtaposés, prolongeant respectivement les surfaces cylindriques et formant une plage interrompue reliant le couvercle au récipient.

Le couvercle et le récipient sont de préférence constitués par un même élément moulé, soufflé ou thermoformé pourvu d'une fente ou d'une entaille séparant lesdites surfaces cylindriques sur une portion de leur pourtour.

Selon un autre mode de réalisation le couvercle présente une ouverture obturée par un élément d'obturation, constitué par un matériau imperméable aux gaz et aux vapeurs soudé à ce couvercle.

Selon une variante de cette réalisation le récipient comporte à sa partie inférieure à l'opposé du couvercle une ouverture obturée par un élément d'obturation soudé à ce récipient.

L'une des extrémités libres de la bande comporte avantageusement deux échancrures symétriques, l'autre extrémité étant soudée à ladite surface de la liaison locale à travers ces échancrures.

L'une des extrémités de la bande peut être soudée sur la surface de ladite liaison locale, l'autre extrémité de cette bande comportant un tronçon libre, au moins partiellement superposé à l'extrémité soudée.

Selon une forme de réalisation préférée, la couche intérieure en matière thermoplastique de la bande souple à structure multicouche comporte une entaille médiane.

Pour faciliter le retrait de la bande souple au moment de l'ouverture de l'emballage, la bande souple à structure multicouche comporte de préférence une bandelette d'arrachement solidaire de la surface extérieure.

Dans le cas où le couvercle présente un profilcreux dans sa partie centrale et comporte autour de cette partie centrale en creux une paroi latérale dont la surface extérieure épouse la surface intérieure de la paroi latérale du récipient de manière à permettre un emboîtement du couvercle dans le récipient à la partie supérieure de ce dernier la profondeur du creux du couvercle, mesurée depuis le bord supérieur du récipient, est de préférence supérieure à la profondeur de la ligne médiane de la bande souple scellée auxdites surfaces cylindriques cette profondeur étant également mesurée depuis le bord supérieur du récipient.

Pour assurer les meilleures condtions d'hygiène l'emballage comporte de préférence un espace libre annulaire, ménagé entre lesdites surfaces cylindriques, limité vers l'intérieur par les parois du couvercle et du récipient en contact l'une avec l'autre et vers l'extérieur par ladite bande souple scellée auxdites surfaces cylindriques.

Cet espace annulaire peut être défini par un dégagement annulaire, ménagé dans la zone de jonction, entre la surface extérieure et la paroi latérale du couvercle et le bord supérieur du récipient.

Le matériau synthétique constituant le couvercle et/ou le récipient a une structure muticouche comportant au moins une couche barrière imperméable au gaz et aux vapeurs.

Selon une autre forme de réalisation dans laquelle le récipient se compose de deux éléments emboîtables et le couvercle est conçu pour s'emboîter sur l'élément supérieur de façon à délimiter deux compartiments séparés, et dans laquelle le premier élément comporte une première surface cylindrique le second élément comporte une seconde surface cylindrique et le couvercle comporte une troisième surface cylindrique, ces trois surfaces cylindriques sont scellées simultanément par une même bande souple entourant tout l'emballage.

Selon une variante de réalisation de l'invention, le couvercle ou le récipient présente une ouverture permettant le remplissage du récipient après la soudure de la bande souple étanche sur lesdites surfaces cylindriques du couvercle et du récipient. La fermeture étanche de l'emballage après son remplissage est réalisée de manière traditionnelle par soudure d'un élément d'obturation de ladite ouverture sur le couvercle, respectivement sur le récipient.

Dans le procédé de fabrication de l'emballage dans lequel le récipient est pourvu d'une ouverture et d'un élément d'obturation conçu pour être soudé au récipient après son remplissage, dans lequel avant le remplissage du récipient, on ménage sur au moins une partie du pourtour de la partie supérieure de ce dernier une zone de moindre résistance et on obture cette zone de moindre résistance à l'aide d'une bande amovible souple et étanche soudée sur la paroi extérieure du récipient et dans lequel, après le remplissage du récipient, on soude l'élément d'obturation, on ménage avantageusement la zone de moindre résistance dans le récipient au moment de sa fabrication et/ou de sa mise en forme par une opération de moulage par injection ou de soufflage de matière synthétique.

La zone de moindre résistance peut être prévue après la fabrication ou la mise en forme de ce dernier par thermoformage. Dans ce cas, on peut ménager une fente sur au moins une partie de son pourtour. Cette fente peut être formée par sciage, fraisage, meulage, usinage par jet de fluide sous pression ou par usinage au laser.

La présente invention sera mieux comprise en référence à la description de plusieurs exemples de réalisation et du dessins annexé, dans lequel:

La figure 1 représente une vue en perspective d'une première forme de réalisation d'un emballage selon l'invention,

La figure 2 représente une vue partielle en coupe de l'emballage de la fig. 1, en cours de réalisation,

La figure 3 représente une vue partielle en plan illustrant plus particulièrement les sabots destinés à fixer les extrémités de la bande souple,

La figure 4 représente une vue en coupe selon la ligne A-A de la fig. 3,

La figure 5 représente une vue partielle en coupe selon la ligne B-B de la fig. 4,

La figure 6 représente une vue partielle en perspective illustrant un mode de fixation des deux tronçons d'extrémité de la bande souple,

La figure 7 représente une vue partielle en coupe d'un autre mode de fixation des tronçons d'extrémité de la bande souple,

La figure 8 représente une vue en perspective correspondant à la vue de la fig. 7,

La figure 9 est une vue en perspective représentant une autre forme de réalisation de l'emballage selon l'invention,

La figure 10 représente une vue en coupe partielle de l'emballage illustré par la fig. 9,

La figure 11 illustre une vue partielle en coupe d'une variante de réalisation de l'emballage selon les figures 1 et 2,

La figure 12 représente une vue en coupe d'une variante de réalisation de l'emballage selon les figures 9 et 10,

La figure 13 représente une autre forme de réalisation de l'emballage selon l'invention, cet emballage ayant la particularité de comporter deux compartiments étanches séparés,

La figure 14 représente une vue partielle en coupe illustrant une première phase de fabrication par thermoformage d'un autre emballage selon l'invention,

La figure 15 représente une seconde phase de fabrication au cours de laquelle on forme une zone de moindre résistance dans le récipient de cet emballage,

La figure 16 représente une vue en élévation du récipient de l'emballage selon l'invention après formation de la zone de moindre résistance,

La figure 17 représente une vue en élévation de l'emballage après mise en place de la bande souple,

La figure 18 représente une vue en élévation de l'emballage après adaptation de l'élément d'obturation et au cours de la phase de nettoyage à la vapeur,

La figure 19 représente une vue partielle en coupe d'une autre forme de réalisation de l'élément d'obturation,

La figure 20 représente une vue partielle en coupe illustrant la phase de chauffage des bords de jonction de l'élément d'obturation et du récipient,

La figure 21 illustre la phase de soudure de ces bords de jonction,

La figure 22 représente une vue partielle en coupe d'une autre forme de réalisation d'un emballage selon l'invention,

La figure 23 représente une vue en coupe d'une bande souple amovible selon un mode de réalisation préféré,

La figure 24 représente une vue en coupe de cette bande après son arrachement,

La figure 25 illustre plus en détail la zone de scellage des tronçons d'extrémité de la bande, et

La figure 26 représente schématiquement un mode de réalisation avantageux d'un type d'emballage selon l'invention.

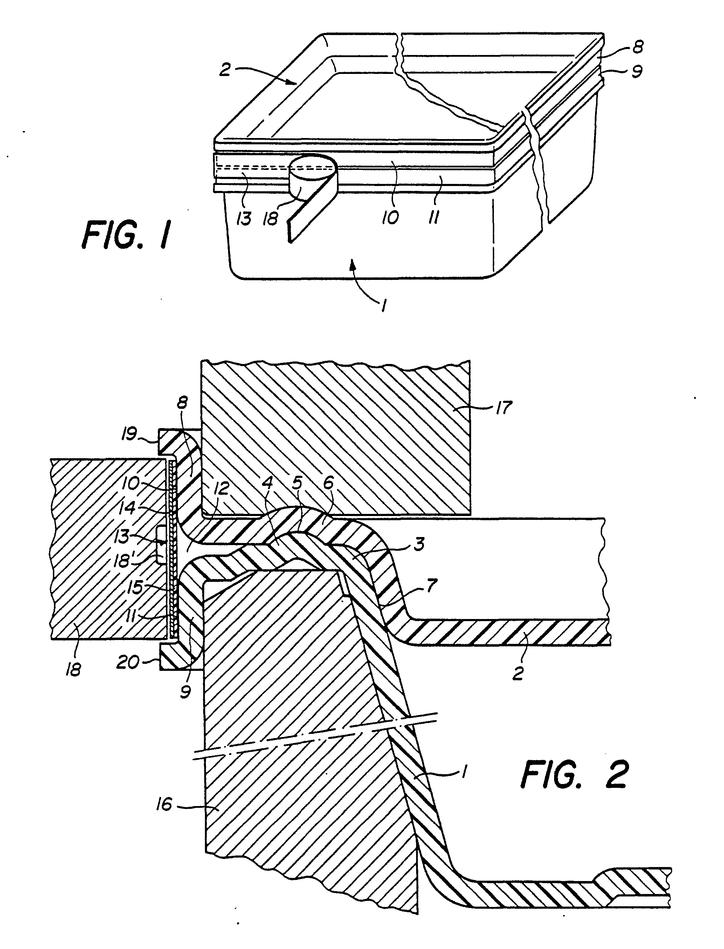

En référence aux figures 1 et 2, l'emballage illustré se compose essentiellement d'un récipient 1 et d'un couvercle 2 ajusté sur l'extrémité supérieure ouverte du récipient. Le récipient 1 comporte un rebord supérieur 3 pourvu d'un bourrelet annulaire 4 dont la forme, les dimensions et la position correspondent a celles d'une gorge 5 annulaire, façonnée dans la surface inférieure d'un rebord extérieur 6 du couvercle 2. Ce bourrelet et cette gorge s'emboîtent l'un dans l'autre de manière a permettre un couplage mécanique de ces deux composants. En outre, le couvercle 2 présente un profil en creux et comporte une paroi latérale droite ou conique définissant une plage d'emboîtement dont la forme de la surface extérieure correspond à celle de la zone supérieure de la surface intérieure de la paroi latérale 7 du récipient 1. De cette manière, le couvercle peut s'emboîter dans le récipient. La coopération entre le bourrelet 4 et la gorge 5 d'une part, et celle entre la paroi latérale conique du couvercle 2 et de la surface intérieure de la paroi latérale 7 du récipient 1 d'autre part, permet de réaliser une ceinture de couplage mécanique du récipient et du couvercle, grâce à laquelle le couvercle atteint le caractère amovible recherché, c'est-à-dire qu'il peut être remis en place sur le récipient à n'importe quel moment après une première ouverture de l'emballage. Les chicanes multiples que présente cette ceinture de couplage mécanique assurent par ailleurs une obturation tout à fait acceptable de l'emballage, même si cette obturation ne peut pas être qualifiée de parfaitement étanche.

La parfaite étanchéité est obtenue grace à la présence de la ceinture de liaison étanche constituée de deux lèvres 8 et 9, respectivement solidaires du rebord 6 du couvercle 2 et du rebord 3 du récipient 1.

Ces lèvres sont pourvues chacune d'une surface périphérique cylindrique 10, respectivement 11, disposées dans le prolongement l'une de l'autre. Par surface cylindrique, on entend toutes surfaces engendrées par le déplacement d'une génératrice rectiligne parallèlement à elle-même, le long d'une ligne directrice fermée. Ces surfaces sont avantageusement séparées l'une de l'autre, sur au moins la plus grande partie de la périphérie de l'emballage, par un espace libre annulaire 12, dont le but principal est de permettre un nettoyage sous pression, par exemple par un jet de vapeur, de l'emballage préalablement rempli et dont les deux composants (le récipient 1 et le couvercle 2) sont maintenus assemblés par des moyens qui seront décrits plus en détail par la suite.

Les deux surfaces cylindriques 10 et 11 reliées entre elles par une bande souple 13 qui est de préférence fixée par thermoscellage. Cette bande souple 13, du type multicouche connu en soi, comporte de préférence une barrière de diffusion des gaz et vapeurs constituée, par exemple, par une feuille en aluminium 14, revêtue d'un film 15 d'une substance thermoscellable telle que, par exemple, du polypropylène, compatible avec le matériau utilisé pour réaliser les composants de l'emballage ou du moins la couche intérieure de ces composants lorsqu'ils sont réalisés à l'aide de matériaux multicouches. Comme cela a été dit plus haut, le couvercle et le récipient comportent une barrière de diffusion des gaz et des vapeurs s'opposant notamment à la diffusion de l'oxygène et de la vapeur d'eau ou de toute autre substance susceptible d'engendrer une dégradation ou une contamination des produits contenus dans le récipient.

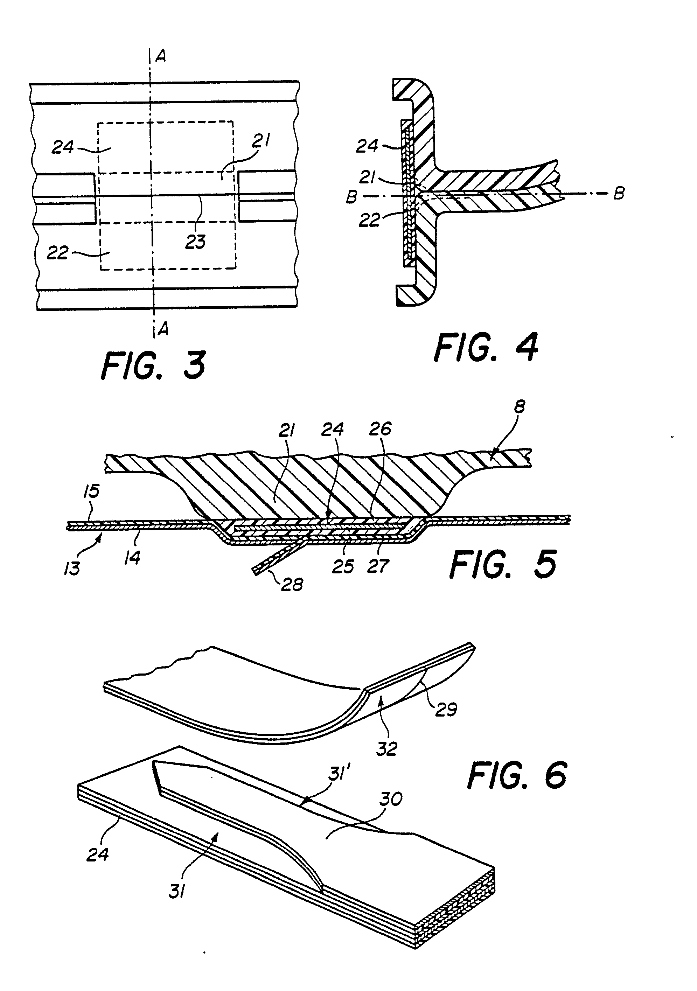

En pratique, la fabrication de l'emballage s'effectue de la manière suivante, illustrée plus particulièrement par la figure 2: le récipient 1 est rempli du produit qu'il est destiné à contenir et le couvercle 2 est emboîté de manière à obturer l'extrémité supérieure ouverte de ce récipient. Pour maintenir en place le couvercle 2 sur le récipient 1, on utilise avantageusement une pièce d'appui 16 servant de support de retenue au récipient 1 et une matrice 17 destinée à exercer une pression déterminée sur le bord du couvercle 2. L'espace annulaire 12 est alors nettoyé de préférence à l'aide d'un jet de vapeur pour que toute particule ou fibre du produit contenu dans l'emballage, et qui aurait éventuellement pu traverser les chicanes ménagées dans la ceinture de couplage mécanique du couvercle et du récipient, ceci malgré toutes les précautions prises pour éviter un tel fait, soit totalement retirée. Le couvercle étant toujours maintenu en appui sur le récipient, on scelle la bande souple 13 simultanément sur les lèvres 8 et 9 à l'aide d'un outil 18 constitué par exemple par un galet ou une molette porté à une température convenable et déplacé sur tout le pourtour de l'emballage en étant appliqué avec force sur la bande souple 13 contre les faces latérales de la pièce d'appui 16 et de la matrice 17. On pourrait utiliser tout autre dispositif d'appui connu en soi agencé pour permettre le thermoscellage de la bande souple 13 sur les lèvres 8 et 9. La molette 18 comporte une rainure ou gorge centrale 18' qui évite le transfert de chaleur dans la partie centrale de la bande 13, afin d'éviter une obturation de l'entaille médiane 29 (voir fig. 6).

On conçoit aisément que pour pouvoir souder la bande 13 sur les surfaces cylindrique 10 et 11 des lèvres 8 et 5, ces lèvres doivent être retenues pour éviter qu'elles s'écartent ou se déforment en raison de la pression exercée latéralement par la molette 18. Dans l'exemple de réalisation représenté, il existe entre la paroi latérale du récipient 1 et la lèvre 9, un espace annulaire libre suffisant qui permet l'insertion de la pièce d'appui 16. La matrice 17, de forme appropriée, peut être mise en place à l'arrière de la lèvre 8. De la sorte, la pression latérale exercée par la molette 18 sur la bande 13 est absorbée par les éléments 16 et 17 qui retiennent les deux lèvres 8 et 9 et simultanément appuient fermement le couvercle 2 sur le récipient 1. Comme le montre la fig. 2 les lèvres 8 et 9 comportent chacune un rebord protubérant 19, respectivement 20, dont le but est d'assurer une protection efficace de la bande souple 13 et d'éviter qu'elle puisse être endommagée par un objet extérieur au cours du stockage ou pendant les manipulations subies par l'emballage cette bande souple qui, comme mentionné précédémment, est de préférence du type à barrière de diffusion des gaz et vapeurs, assure une parfaite étanchéité de l'emballage sur toute sa périphérie, à l'exception de la zone de jonction des deux extrémités de cette bande si l'on ne prend pas les précautions requises décrites plus en détail ci-dessous.

Pour compléter l'étanchéité obtenue sur la plus grande partie de la périphérie de l'emballage, le couvercle et le récipient comportent chacun un sabot 21, respectivement 22 (voir figures 3 et 4), qui prolonge la surface cylindrique de la lèvre correspondante du couvecle et respectivement du récipient sur une faible partie de la périphérie de l'emballage, de manière a combler l'espace annulaire libre 12 à cet endroit, comme le montrent les figures 3 et 4, la surface de jonction des deux sabots 21 et 22, représentée par la ligne 23, correspond à une surface plane qui est limitée vers l'intérieur de l'emballage par la zone de couplage mécanique du couvercle et du récipient et, plus particulièrement, par la rampe extérieure du bourrelet 4 engagé dans la gorge correspondante 5. Ces deux sabots 21 et 22, adjacents lorsque le couvercle est maintenu sur le récipient, servent d'appui aux deux extrémités de la bande souple 13 lorsqu'elle est fixée sur les surfaces cylindriques correspondantes 10 et 11 des lèvres de liaison 8 et 9. Dans le cas où la bande souple 13 comporte une couche extérieure constituant la barrière de diffusion des gaz 14, réalisée par exemple en aluminium, et une couche intérieure thermoscellable 15, réalisée par exemple en polypropylène, on conçoit aisément que lors du recouvrement des deux tronçons d'extrémité de la bande, la couche intérieure de l'un des tronçons, qui se superpose à la couche extérieure de l'autre tronçon, ne puisse pas être soudée sur ce dernier. Dans ce cas, l'étanchéité ne pourra être parfaite que si l'on applique sur les deux sabots 21 et 22 un carreau 24 illustré par les fig. 3, 4 et 5, recouvrant intégralement la ligne de jonction 23. Ce carreau comporte avantageusement une barrière de diffusion des gaz et des vapeurs 25 recouverte, sur ses deux faces, respectivement par une couche 26 et 27 de substance thermoscellable identique ou compatible avec la couche intérieure 15 de la bande souple 13 et avec le matériau constituant la surface 10, respectivement 11 des lèvres 8, respectivement 9. La soudure des deux tronçons d'extrémité peut ainsi être effectuée de façon complète.

On notera que la molette évidée devra être remplacée par une molette pleine ou tout autre moyen approprié pour assurer le scellage de la bande sur le carreau, sur toute la hauteur de ce dernier.

Pour faciliter l'ouverture de la bande souple, l'un des tronçon d'extrémité dépasse quelque peu l'autre. Comme sa surface intérieure thermoscellable n'adhère pas à la surface extérieure de l'autre tronçon, ce prolongement constitue en fait une languette d'arrachage 28 facilitant le détachement de la bande souple en vue de l'ouverture de l'emballage.

Au moment de l'ouverture de l'emballage, si la couche thermoscellée de la bande souple 13 adhère fortement sur les lèvres de liaison du couvercle et du récipient, ce qui est le cas le plus fréquent, l'arrachement de la bande souple peut provoquer le decollement et la déchirure de la couche extérieure du matériau multicouche des deux composants 1 et 2 de l'emballage ou le décollement de la barrière de diffusion des gaz de la bande souple 13. Cette dernière solution qui est considérée comme la plus avantageuse, peut être favorisée par la mesure suivante: afin d'éviter qu'après le décollement de la feuille d'aluminium ou d'un matériau synthétique tel que par exemple le PVDC constituant la barrière de diffusion des gaz et des vapeurs, le film thermoscellable qui reste collé sur les surfaces cylindriques des lèvres 8 et 9 maintienne l'emballage fermé, on prévoit, comme le montre la fig. 6, d'entailler ce film le long de son axe médian 29. De cette manière, apres décollement de la barrière de diffusion, les deux parties du film thermoscellable se séparent l'une de l'autre en restant solidaires respectivement de la lèvre du couvercle et de la lèvre du récipient. Cette entaille est automatiquement resoudée sur le tronçon de la bande qui est soudée au carreau, ce qui garantit l'étanchéite de cette zone.

L'amorce du décollement peut être facilitée de la manière suivante: dans le tronçon d'extrémité inférieur 30, on découpe deux échancrures latérales symetriques 31 et 31'. Lorsque l'autre tronçon d'extrémité 32 est soudé sur le précédent, seules ses parties externes correspondant aux échancrures 31 et 31' adhèreront à la couche thermoscellable extérieure du carreau 24 a double face thermoscellable soudé sur les sabots 21 et 22. La partie centrale de la couche thermoscellable du tronçon d'extrémité supérieure 32 n'adhère pas à la barrière formant la couche extérieure du tronçon d'extrémité inférieur 30. De ce fait, au cas ou la bande souple ne se descelle pas de la face externe du carreau, lorsqu'on tire sur le tronçon d'extrémité 32 pour l'arracher, on amorce le déchirement de la barrière située sur la face extérieure du tronçon d'extrémité 32, ce qui permet une ouverture fiable et sûre de l'emballage. Seul le carreau 24 reste fixé aux sabots 21 et 22. On peut soit le découper, ce qui ne constitue en général pas un handicap en raison de sa faible dimension, soit l'utiliser comme une charnière qui facilite la remise en place du couvercle.

A cet effet, il serait d'ailleurs envisageable d'augmenter la longueur du sabot pour réaliser un emballage à couvercle articulé ou prévoir deux paires de sabots, espacées l'une de l'autre pour réaliser deux charnières disposées sur un même côte d'un emballage de forme carrée ou rectangulaire.

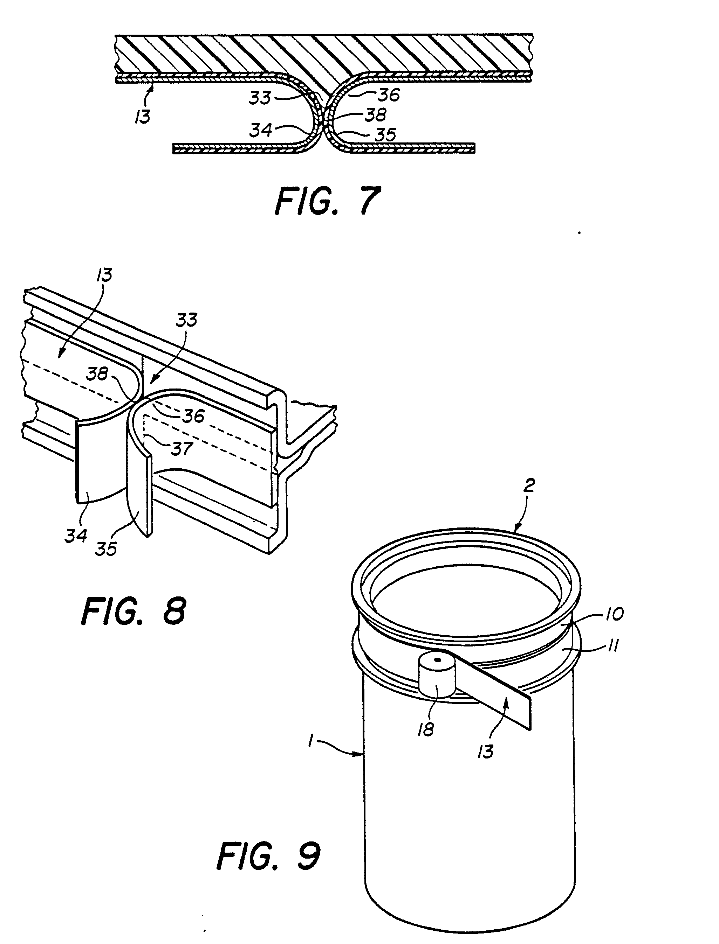

Les fig. 7 et 8 illustrent une variante permettant de supprimer le problème de la superposition des deux tronçons d'extrémité de la bande souple 13 dans le cas ou le récipient 1 et le couvercle 2 sont réalisés par moulage. Dans ce cas, les deux sabots 21 et 22 sont profilés de manière à former chacun un bec 33 dont l'arête est sensiblement perpendiculaire à l'axe de la bande souple. Ce bec guide les deux tronçons d'extrémité 34 et 35 qui, du fait que leurs couches thermoscellables sont juxtaposées à cause du retournement provoqué par les becs 33, peuvent être soudés dos à dos l'un contre l'autre sur une plage 38 s'étendant sur toute la largeur de la bande 13 à partir d'une ligne contenant les arêtes 36 et 37 desdits becs 33. La soudure peut être effectuée au niveau du bec à l'aide de deux molettes ou de deux outils qui appliquent simultanément une force transversale sur les deux tronçons d'extrémité de la bande souple.

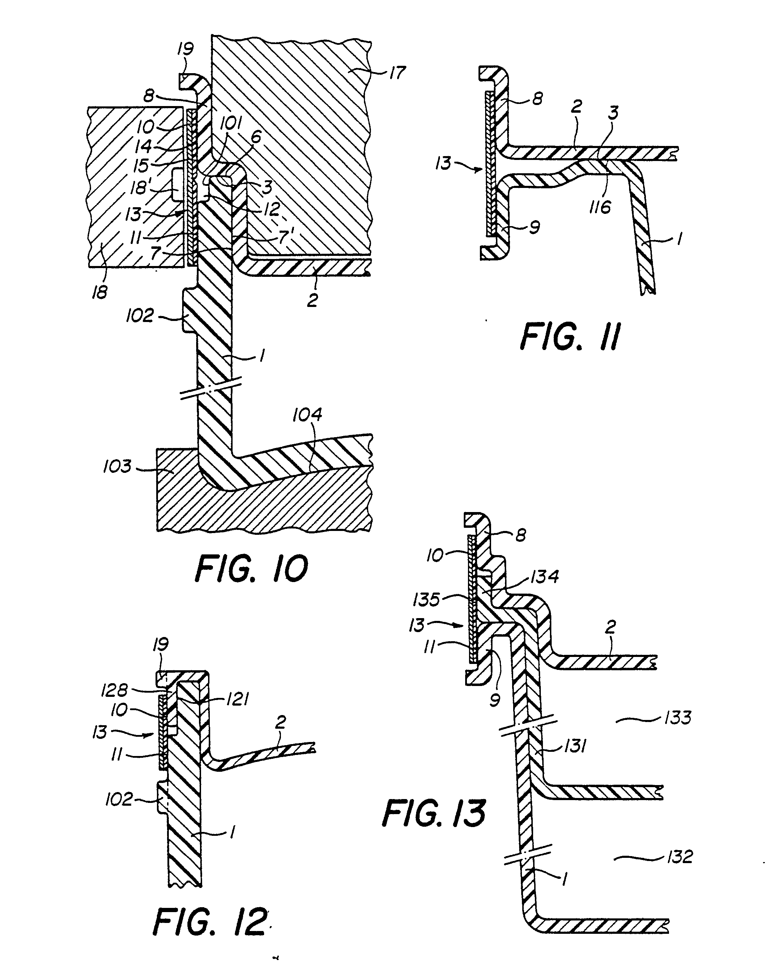

Les figures 9 et 10 représentent une autre forme de réalisation de l'emballage selon l'invention. Bien que la forme de l'emballage représenté soit de révolution, l'invention ne se limite pas à cette forme particulière, mais peut présenter n'importe quelle forme adaptée à l'utilisation choisie. Comme pour l'emballage décrit précédemment, celui-ci comporte un récipient 1 et un couvercle 2 en creux ajusté sur l'extrémité supérieure du récipient 1. Dans ce cas, le récipient est de préférence réalisé selon un procédé de moulage par injection, de sorte que ses parois peuvent avoir une forme quelconque et une épaisseur variable. Le couvercle 2 par contre, est avantageusement mais non exclusivement, réalisé par thermoformage. Le récipient 1 comporte un bord supérieur 3 sensiblement plan dont la forme et les dimensions sont complémentaires à celles d'un rebord exterieur 6 du couvercle 2. Ce couvercle présente un profil en creux et comporte une paroi latérale 7', droite ou légèrement conique, définissant une plage d'emboîtement dont la forme de la surface extérieure correspond à celle de la zone supérieure de la surface interieure de la paroi latérale 7' du récipient 1. De cette manière le couvercle peut s'emboîter dans le récipient, et la coopération entre le rebord supérieur 3 du récipient 1 et le rebord extérieur 6 du couvercle 2 d'une part, et celle de la paroi latérale conique ou droite du couvercle 2 et de la surface intérieure de la paroi latérale 7 du récipient 1 d'autre part, permet de former ladite première ceinture de couplage mécanique entre le récipient et le couvercle.

Le couvercle 2 comporte une lèvre de liaison 8 dont une partie de la surface extérieure définit ladite seconde surface cylindrique 10. Ladite première surface cylindrique 11 appartenant au récipient, est dans ce cas, constituée par une section de la surface périphérique de la paroi latérale du récipient 1, voisine de son bord supérieur 3. Les deux surfaces cylindriques 10 et 11 forment ladite seconde ceinture de liaison étanche. Comme précédemment, une bande souple étanche 13 est scellée simultanément sur les deux surfaces cylindriques 10 et 11 pour compléter ladite seconde ceinture de liaison étanche. Cette bande comporte à nouveau une surface extérieure 14 formant barrière de diffusion des vapeurs et gaz, realisée par exemple à l'aide d'une feuille en aluminium et une surface intérieure 15 réalisée en un matériau thermoscellable.

Les deux surfaces cylindriques 10 et 11 sont séparées par un espace libre 12 qui est constitué dans ce cas par un dégagement annulaire 101 ménagé dans la zone de jonction entre la surface extérieure de la paroi latérale et le bord supérieur 3 du récipient 1. Pour protéger la bande souple, la lèvre 8 du couvecle 2 comporte avantageusement un rebord protuberant 19. La paroi latérale du récipient 1 comporte de préférence un bourrelet périphérique 102 dont l'épaisseur correspond sensiblement à la profondeur du rebord 19 de la lèvre du couvercle 2.

Lors de la fabrication de l'emballage, le récipient 1 préalablement rempli est supporté par sa base par une pièce d'appui 103 dont le profil est de préférence au moins partiellement adapté à celui du fond 104 du récipient 1. Cette pièce d'appui 103 remplace la pièce d'appui 16 utilisée dans l'exemple de réalisation des figures 1 et 2. Une matrice 17 permet d'appuyer le couvercle 2 sur le récipient 1 et sert à renforcer les zones de liaison du couvercle et du récipient pour l'application de la bande souple 13 à l'aide d'une molette ou de tout autre dispositif d'appui 18.

L'exemple de réalisation illustrée par la fig. 11 diffère de celle décrite en detail en référence aux figures 1 et 2 en ce que la ceinture de couplage mécanique ne comporte pas d'emboîtement du couvercle dans le récipient. Les deux plages de couplage de forme annulaire plane sont constituées par le rebord superieur 3 du récipient 1 et la surface extérieure 116 du fond du couvercle 2. Les lèvres 8 et 9 respectivement solidaires du couvercle 2 et du récipient 1 sont scellées par la bande souple 13.

L'exemple de réalisation de la fig. 12 est une variante de celle illustrée par les figures 9 et 10. Le couvercle 2 qui est moulé comporte dans ce cas une lèvre 128 repliée vers le bas du récipient 1. La paroi latérale du récipient 1 est profilée de telle manière que la lèvre 128 du couvercle puisse s'encastrer dans l'épaisseur de cette paroi. A cet effet, cette paroi latérale comporte un dégagement annulaire 121 qui correspond au dégagement annulaire 101 de la fig. 10, mais dont la hauteur est suffisamment importante, d'une part pour permettre la mise en place de la lèvre 128 et d'autre part pour ménager l'espace annulaire libre 12 entre les deux surfaces cylindriques 10 et 11 scellées par la bande 13. Un bourrelet périphérique 102 ainsi qu'un rebord 19 peuvent être prévus, le cas échéant, pour protéger la bande souple 13 contre les chocs et d'éventuelles blessures subies au cours des manipulations de l'emballage.

Les différents emballages décrits précédemment peuvent avoir des applications multiples et variées. Ils sont utiles chaque fois qu'il est nécessaire de stocker un produit dans un emballage étanche pour éviter une contamination de ce produit. Ceci est le cas notamment des produits alimentaires et en particulier des mets préparés ou précuisinés. L'emballage illustre par les figures 9 et 10 est particulièrement pratique pour les boissons. D'autres utilisations telles que par exemple le conditionnement de matériel ou produits stérilisés ou aseptisés peuvent être envisagées.

L'emballage selon la fig. 13 est particulièrement destiné au conditionnement et au stockage de produits à deux composants destinés à être melangés juste avant leur utilisation. C'est le cas notamment de certaines colles, de peintures, de mastics, etc... à deux composants. On sait que ces composants doivent être stockés dans des récipients à deux compartiments étanches de telle manière que les vapeurs émanant de chaque composant ne puisse pas pénétrer dans le compartiment contenant l'autre composant.

A cet effet, l'emballage illustre par la fig. 13 comporte un récipient principal 1, un couvercle 2 et une cloison de séparation 131 qui délimite un premier compartiment 132 avec le fond du récipient 1 et un second compartiment 133 avec le couvercle 2. Ce couvercle est pourvu d'une lèvre 8 qui porte ladite première surface cylindrique 10. Le récipient 1 est également pourvu d'une lèvre 9 comportant ladite seconde surface cylindrique 11. La cloison de séparation 131 est pourvue d'une troisième lèvre 134 qui porte la troisième surface cylindrique 135. Les trois surfaces cylindriques 10, 11 et 135 sont disposées dans le prolongement l'une de l'autre de telle manière que la bande souple 13 puisse être scéllée simultanément sur les trois surfaces de manière à réaliser ladite seconde ceinture de liaison étanche entre les trois composants principaux de cet emballage. La première ceinture de couplage mécanique est obtenue, dans ce cas, par emboîtement de la cloison intermédiaire dans le récipient 1 et du couvercle 2 dans la cavité de la cloison intermédiaire 131.

Les formes d'exécution ci-dessus, illustrées par les figures 1 à 13 exigent la mise en place, sur la ligne de remplissage du récipient, d'une installation spécialement destinée à la mise en place et à l'enroulement de la bande souple autour du récipient ainsi qu'à sa soudure, après le remplissage du récipient.

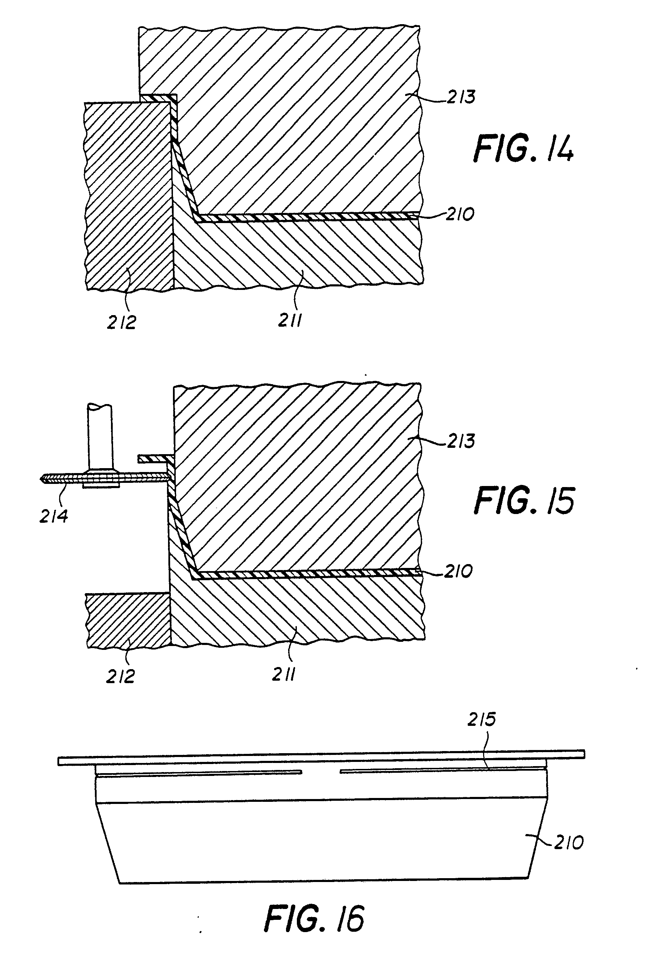

Les figures 14 à 26 illustrent des formes d'exécution de variantes de l'invention dans lesquelles la bande souple étanche est soudée au couvercle avant le remplissage et l'obturation définitive de l'emballage, ce qui permet de simplifier considérablement les lignes de remplissage. La bande souple étanche peut être avantageusement soudée au couvercle et au récipient à l'avance, lors de la fabrication de ces éléments qui peut être centralisée, les emballages ainsi que les produits prévus pour les remplir pouvant être utilisés après leur stockage éventuel, sur plusieurs lignes de remplissage. Dans cette variante, soit le couvercle, soit le récipient comporte une ouverture qui est obturée par la soudure traditionnelle, bien connue en soi et pour laquelle les installations existent, d'un élément d'obturation après le remplissage de l'emballage.

En référence à la fig. 14, le récipient 210 de l'emballage est par exemple fabriqué par thermoformage d'une feuille de matériau synthétique multicouche disposée entre une matrice comportant un élément central 211 et un élément extérieur annulaire 212. Un poinçon 213 coopère avec la matrice pour façonner le récipient 210.

Après cette phase de formage, l'élément central 211 de la matrice et le poinçon 213 se soulèvent pour permettre l'accès d'une lame de scie, d'une fraise, d'un couteau circulaire ou d'une meule 214, comme le montre la fig. 15. Cette lame de scie 214 est conçue pour effectuer une entaille et former une fente 215 (voir fig. 16) sur au moins une partie du pourtour du récipient 210. Cette fente 215, qui est de préférence ménagée sur la partie la plus importante du pourtour, au voisinage de l'extrémité supérieure du récipient, forme une zone de moindre résistance permettant par la suite l'ouverture aisée de l'emballage.

La technique du sciage ou fraisage pour former la fente n'est utilisée que dans certains cas. Lorsque l'emballage est réalisé par injection, la fente peut être prévue lors de sa fabrication. Dans certains cas, cette fente partielle peut être remplacée par une découpe franche qui sépare le récipient en deux parties juxtaposées. Pour d'autres réalisations, la fente peut également être remplacée par une entaille profonde laissant subsister une mince épaisseur de matière au voisinage de la paroi intérieure-du récipient.

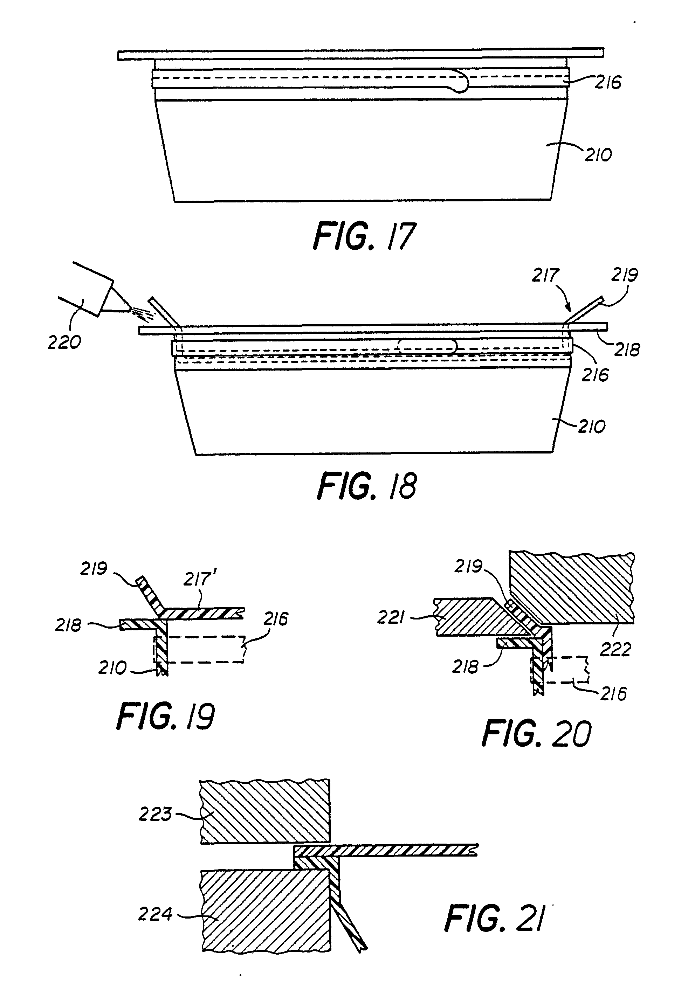

L'étape suivante, illustrée par la fig. 17, consiste à recouvrir la fente 215 par une bande 216 amovible, souple et étanche. Cette bande comporte une barrière de diffusion des gaz et des vapeurs et est thermosoudée sur la paroi extérieure du récipient. Cette opération est effectuée avant le remplissage du récipient, c'est-à-dire à un moment où ce récipient peut être manipulé tout à fait librement, sans le moindre risque pour le contenant.

Après un stockage plus ou moins long, le récipient 210 est ensuite rempli et un couvercle 217 est adapté sur ce récipient. Dans l'exemple illustré par la fig. 18, le récipient comporte un rebord de jonction 218, et le couvercle, en forme de creux, comporte également un rebord de jonction 219. Comme le montre cette figure, le rebord 219 est quelque peu replié vers le haut de manière à former avec le rebord 218 du récipient un bec ouvert qui permet le nettoyage à la vapeur, ou la désinfection par toute autre substance appropriée, à l'aide d'une ou plusieurs buses 220, des rebords de jonction 218 et 219.

La fig. 19 illustre un récipient 210 pourvu comme précédemment d'un rebord de jonction 218 et d'un couvercle 217' comportant un rebord de jonction 219. Le couvercle 217' diffère du couvercle 217 en ce qu'il est plan et non en creux comme le précédent.

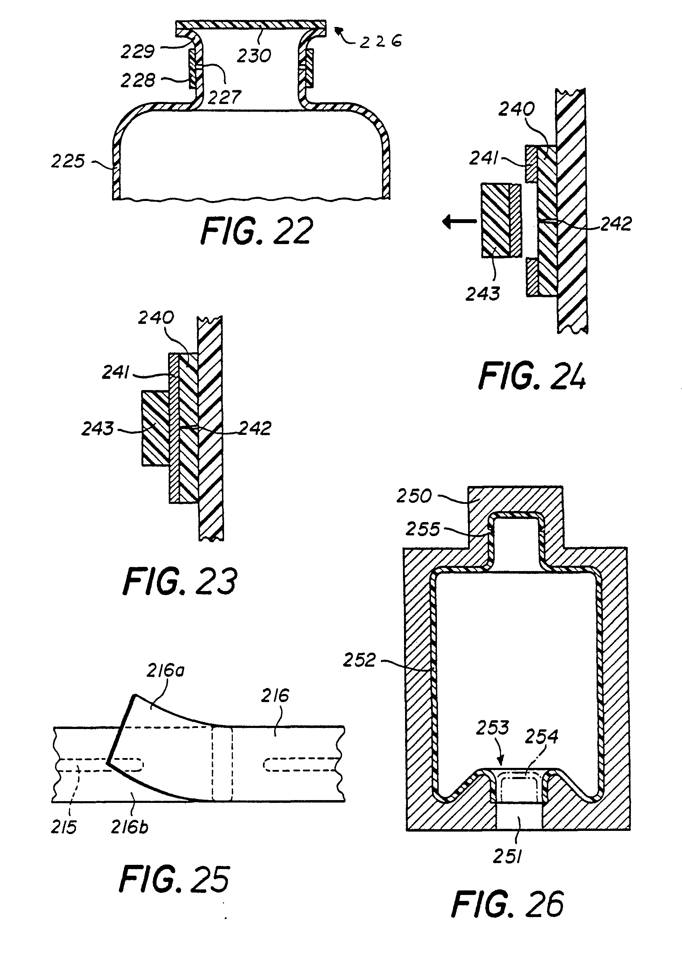

Les deux phases de soudage des rebords de jonction 218 et 219 sont illustrées par les fig. 20 et 21. Un corps rayonnant 221 de profil approprié, formé par au moins deux tiroirs mobiles latéralement, est prévu pour s'introduire dans le bec formé par les deux rebords 218 et 219 sur tout le pourtour du récipient. On poinçon 222 retient le rebord 219 dans sa position inclinée. Ce corps rayonnant a pour but de ramollir au moins la couche superficielle des rebords de manière à permettre leur soudage, lorsque le rebord 219 du couvercle est rabattu contre le rebord 218 du récipient, au moyen d'un poinçon 222 et d'une matrice de retenue 224.

La figure 22 illustre un autre mode de réalisation d'un emballage, pouvant être une bouteille 225 destinée à contenir un liquide tel que de la bière, un jus de fruit, de l'eau minérale ou une préparation de liquide quelconque. La capsule 226 de la bouteille est initialement soit entièrement séparée du corps de la bouteille, soit partiellement attachée. La fente de jonction 227 est rendue étanche par une bande souple étanche 228, soudée sur tout le pourtour du col de la bouteille. Dans la zone de jonction des deux extrémités de la bande souple, l'étanchéité peut être assurée, dans le cas où la capsule 226 est entièrement séparée du corps de la bouteille, par une soudure ou un pavé rapporté sur lequel sont superposées lesdites extrémités de la bande. La capsule 226 se compose initialement d'un tronçon annulaire 229 et d'un capuchon plan 230. Le tronçon annulaire 229 est rapporté au col de la bouteille et fixé au moyen de la bande souple 228 avant le remplissage de cette bouteille. Le capuchon est soudé sur le tronçon annulaire 229 après remplissage de la bouteille. L'ouverture de la bouteille se fait par arrachement de la bande souple.

Cet emballage présente l'avantage de s'utiliser très simplement. En effet, la bande souple qui comporte une barrière de diffusion des gaz et des vapeurs, généralement sous la forme d'un film d'aluminium, présente une languette d'arrachage à l'endroit où les deux extrémités de la bande se recouvrent. Pour que la zone de recouvrement soit étanche, on la positionne de préférence à l'emplacement où la fente formant la zone de moindre résistance, est interrompue. Après l'arrachage de la bande, opération qui revient à peler cette bande, la couche intérieure restant soudée à la paroi du récipient, l'utilisateur peut ouvrir l'emballage. Dans le cas où le couvercle est en creux, la fermeture de l'emballage reste possible à condition que le creux du couvercle ait une profondeur suffisante pour que le nouveau couvercle formé de l'ancien couvercle auquel est soudée une ceinture constituant initialement la partie du récipient située au-dessus de la zone de moindre résistance, puisse s'emboîter sur le récipient.

La figure 23 illustre, à titre d'exemple, une forme de réalisation avantageuse de la bande amovible souple utilisée dans le cadre de la présente invention. Cette bande comporte une couche intérieure 240 d'un matériau thermoscellable par exemple en polypropylène compatible avec la surface extérieure thermoscellable du récipient et une barrière étanche aux gaz et vapeurs 241, constituée par exemple par un film d'aluminium mince, dont l'épaisseur est par exemple de 10 μm. La couche intérieure 240 comporte avantageusement une entaille médiane 242 facilitant la séparation des deux parties de l'emballage après arrachement de la bande. Pour faciliter cet arrachement, la bande est pourvue d'un fil ou d'une bandelette d'arrachement 243, à haute résistance mécanique constituée par exemple par un composite époxy-fibre de verre, solidaire du film d'aluminium formant la barrière étanche aux gaz et vapeurs ou d'une autre couche extérieure de la bande multicouche. La bandelette 243 adhère de préférence très fortement à cette couche ou au film-barrière, de telle manière qu'au cours de l'arrachement, la barrière s'enlève complètement ou se déchire en son milieu, comme le montre la fig. 24. Pour faciliter cet arrachement on peut prévoir des entailles latérales faites par exemple au moyen de molettes.

La fig. 25 illustre d'une manière plus détaillée les tronçons d'extrémités de la bande 216. Les deux tronçons d'extrémités 216a et 216b sont scellés sur la zone du récipient dans laquelle la fente 215 est interrompue. Le tronçon 216a forme une languette d'arrachage qui peut d'ailleurs être partiellement superposée (comme le montre la figure et scellée à une partie du tronçon d'extrémité 216b.

La fig. 26 illustre un mode de réalisation avantageux d'une bouteille par un procédé de soufflage. On moule de soufflage 250 comporte à sa base une ouverture 251 qui permet l'introduction de l'aiguille de soufflage. Le récipient ou la bouteille 252 ainsi obtenus, comportent une ouverture 253 disposée à leur base. Cette ouverture, utilisée pour le remplissage (après retournement de la bouteille) est ensuite obturée de manière définitive par un fond 254, thermosoudé.

La zone de moindre résistance est de préférence formée au moment du soufflage, grâce à la présence de couteaux 255 disposés à l'intérieur du moule 250.

## Revendications

1. Emballage étanche comportant un récipient (1) composé d'une ouverture et d'un couvercle (2) réalisés en un matériau synthétique moulé, soufflé ou thermoformé, les faces externes de ce récipient et de ce couvercle étant constituées par une matière thermoplastique et présentant des surfaces cylindriques situées dans le prolongement l'une de l'autre, et une bande amovible souple scellée sur lesdites surfaces cylindriques pour fixer le couvercle au récipient, ladite bande souple ayant une structure multicouche présentant une couche intérieure constituée par une matière thermoplastique soudable à ladite matière synthétique et au moins une couche barrière intermédiaire constituée par une matière imperméable aux gaz et aux vapeurs, et étant soudée au récipient et au couvercle le long de deux plages de soudure parallèles en forme de boucles fermées s'étendant sans discontinuité sur lesdites surfaces cylindriques, caractérisé en ce que ces surfaces cylindriques sont pourvues chacune en un point de leur pourtour d'un bec (33) protubérant vers l'extérieur et formant chacun une arête (36 respectivement 37), ces bec (33) étant disposés de telle manière que leurs arêtes (30) et (37) soient situées dans le prolongement l'une de l'autre perpendiculairement à l'axe de la bande souple (13) et en ce que les deux tronçons d'extrémité de cette bande souple sont soudés dos à dos à l'extrémité desdites arêtes (30, 37).

2. Emballage étanche comportant un récipient (210; 225) composé d'une ouverture et d'un couvercle (217; 229, 230) réalisés en un matériau synthétique moulé, soufflé ou thermoformé, les faces externes de ce récipient et de ce couvercle étant constituées par une matière thermoplastique et présentant des surfaces cylindriques situées dans le prolongement l'une de l'autre, caractérisé en ce que le couvercle (217) est lié au récipient (210) par une liaison annulaire de leurs parois, la zone de liaison étant délimitée par une entaille périphérique (215; 227) séparant lesdites surfaces cylindriques et interrompue par une liaison locale, ladite liaison locale étant constituée par un carreau (24) dont les deux faces sont revêtues d'un matériau soudable à ladite matière thermoplastique revêtant les faces externes du récipient et du couvercle, ce carreau étant soudé sur lesdites surfaces cylindriques du récipient et du couvercle.

3. Emballage selon la revendication caractérisé en ce qu'il comporte des sabots (21, 22) prolongeant respectivement les surfaces cylindriques du récipient et du couvercle ledit carreau (24) étant soudé sur lesdits sabots (21, 22) juxtaposés formant une plage ininterrompue reliant le couvercle au récipient.

4. Emballage selon la revendication 2, caractérisé en ce que le couvercle (217) et le récipient (210) sont constitués par un même élément moulé, soufflé ou thermoformé pourvu d'une fente (215) ou d'une entaille séparant lesdites surfaces cylindriques sur une portion de leur pour tour.

5. Emballage selon la revendication 2, caractérisé en ce que le couvercle présente une ouverture obturée par un élément d'obturation (230) constitué par un matériau imperméable aux gaz et aux vapeurs, soudé à ce couvercle.

6. Emballage selon la revendication 2, caractérisé en ce que le récipient (252) comporte à sa partie inférieure à l'opposé du couvercle, une ouverture obturée par un élément d'obturation (254) soudé à ce récipient.

7. Emballage selon la revendication 1, caractérisé en ce que l'une des extrémités libres (30) de la bande (13) comporte deux échancrures symétriques (31, 31') et en ce que l'autre extrémité libre (32) est soudée à ladite surface de la liaison locale à travers ces échancrures.

8. Emballage selon la revendication 1, caractérisé en ce que l'une des extrémités de la bande (13) est soudée sur la surface de ladite liaison locale et en ce que l'autre extrémité de la bande (13) comporte un tronçon libre au moins partiellement superposé à l'extrémité soudée.

9. Emballage selon la revendication 1, caractérisé en ce que la couche intérieure en matière thermoplastique de la bande souple (13) à structure multicouche comporte une en taille médiane.

10. Emballage selon la revendication 1, caractérisé en ce que la bande souple (13) à structure multicouche comporte une bandelette d'arrachement solidaire de sa surface extérieure.

11. Emballage selon la revendication 1, dans lequel le couvercle présente un profil en creux dans sa partie centrale et comporte autour de cette partie centrale en creux une paroi latérale dont la surface extérieure épouse la surface intérieure de la paroi latérale du récipient, de manière à permettre un emboîtement du couvercle dans le récipient à la partie supérieure de ce dernier, caractérisé en ce que la profondeur du creux du couvercle (2) mesurée depuis le bord supérieur du récipient est supérieure à la profondeur de la ligne médiane de la bande souple (13) scellée auxdites surfaces cylindrique (10, 11) cette profondeur étant également mesurée depuis le bord supérieur du récipient.

12. Emballage selon la revendication 8, caractérisé en ce qu'il comporte un espace libre annulaire (12) ménagé entre lesdites surfaces cylindriques limité vers l'intérieur par les parois du couvercle et du récipient en contact l'une avec l'autre et vers l'extérieur par ladite bande souple scellée auxdites surfaces cylindriques.

13. Emballage selon la revendication 12, caractérisé en ce que ledit espace annulaire est constitué par un dégagement annulaire (101) ménagé dans la zone de jonction entre la surface extérieure de la paroi latérale du couvercle et le bord supérieur (3) du récipient (1).

14. Emballage selon la revendication 1 dans lequel le récipient (1) se compose de deux éléments emboîtables (1, 131), et le couvercle (29) est conçu pour s'emboîter sur l'élément supérieur (131) de façon à délimiter deux compartiments séparés (132, 133), le premier élément (1) comportant une première surface cylindrique (11) le second élément (131) comportant une seconde surface cylindrique (135) et le troisième élément (25) comportant une troisième cylindrique (10), caractérisé en ce que ces trois surfaces cylindriques (10, 135, 11) sont soudées simultanément par une même bande souple (13) entourant tout l'emballage.

15. Procédé de fabrication de l'emballage selon les revendications 1 et 2 dans lequel l'on ferme cet emballage, le récipient (1) ayant été préalablement rempli, en appliquant avec force le couvercle sur le récipient, au moyen d'une matrice engagée au moins partiellement dans le creux du couvercle et d'une pièce d'appui retenant le récipient et dans lequel l'on soude la bande souple (13) sur le pourtour desdites surfaces cylindriques (10, 11) en l'appliquant avec force contre ces surfaces au moyen d'un outil (18) porté à une température suffisante pour assurer le thermoscellage du matériau thermoplastique soudable de la bande souple avec le matériau thermoplastique soudable des surfaces cylindriques, caractérisé en ce que l'on nettoie l'espace annulaire (12) au moyen d'un jet d'eau et/ou de vapeur après avoir fermé le récipient (1) et le couvercle (2) et avant de souder la bande souple (13) sur les surfaces cylindriques (10, 11).

16. Procédé de fabrication de l'emballage selon les revendications 1 et 2, dans lequel le récipient est pourvu d'une ouverture et d'un élément d'obturation conçu pour être soudé au récipient après son remplissage, dans lequel avant le remplissage du récipient, on ménage sur au moins une partie du pourtour de la partie supérieure de ce dernier une zone de moindre résistance (215) et on obture cette zone de moindre résistance à l'aide d'une bande amovible souple (228) et étanche soudée sur la paroi extérieure du récipient et dans lequel après le remplissage du récipient, on soude l'élément d'obturation, caractérisé en ce que l'on ménage la zone de moindre résistance dans le récipient au moment de sa fabrication etiou de sa mise en forme par une opération de moulage par injection ou de soufflage de matière synthétique.

17. Procédé selon la revendication 16, caractérisé en ce que l'on ménage la zone de moindre résistance (215) dans le récipient après la fabrication et/ou la mise en forme de ce dernier par thermoformage.

18. Procédé selon la revendication 16, caractérisé en ce que l'on ménage la zone de moindre résistance en formant une fente (215) sur au moins une partie du pourtour du récipient (210).

19. Procédé selon la revendication 18, caractérisé en ce que l'on forme la fente (215) par sciage, fraisage, meulage, usinage par jet de fluide sous pression et/ou usinage au laser.

**Patentansprüche**

1. Dicht verschlossene Verpackung, bestehend aus einem Behälter (1) mit einer Öffnung und einem Deckel (2), die aus einem geformten, geblasenen oder warmgeformten Kunststoff ausgeführt sind, wobei die Außenflächen dieses Behälters und dieses Deckels aus einem thermoplastischen Werkstoff gebildet werden und nacheinander angeordnete zylindrische Oberflächen und einen auf den besagten zylindrischen Oberflächen befestigten, biegsamen und abnehmbaren Streifen für die Befestigung des Deckels auf dem Behälter aufweisen, wobei der biegsame Streifen ein mehrschichtiges Gefüge mit einer Innenschicht aus einem thermoplastischen Werkstoff, der mit dem besagten Kunststoff geschweißt werden kann, und mindestens eine dazwischen liegenden Sperrschicht aufweist, die aus einem Werkstoff besteht, der für Gase und Dämpfe undurchlässig ist und mit dem Behälter und dem Deckel entlang zwei parallele Schweißbereiche geschweißt ist, die sich als geschlossene Schleifen ununterbrochen auf den besagten zylindrischen Oberflächen erstrecken, dadurch gekennzeichnet, daß diese zylindrische Oberflächen je an einer Stelle ihres Umfangs mit einer Nase (33) versehen sind, die nach außen herausragt und je eine Kante (36/37) bildet, wobei diese Nasen (33) derart angeordnet sind, daß ihre Kanten (36) und (37) hintereinander senkrecht zu der Achse des biegsamen Streifens (13) liegen und daß die beiden Endstücke des biegsamen Streifens mit der Rückseite am Ende der besagten Kanten (36) und (37) geschweißt sind.

2. Dicht verschlossene Verpackung, bestehend aus einem Behälter (210; 225) mit einer Öffnung und einem Deckel (217; 220; 230;) die aus einem geformten, geblasenen oder warmgeformten Kunststoff ausgeführt sind, wobei die Außenflächen dieses Behälters und dieses Deckels aus einem thermoplastichen Werkstoff gebildet werden und nacheinander angeordnete zylindrische Oberflächen aufweisen, dadurch gekennzeichnet, daß der Deckel (217) mit dem Behälter (210) durch eine ringförmige Verbindung ihrer jeweiligen Wandungen verbunden ist, wobei der Bereich der Verbindung durch einen Einschnitt am Umfang (215; 227) abgegrenzt ist, die die besagten zylindrischen Oberflächen trennt, und durch eine örtliche Verbindung unterbrochen wird, wobei die besagte örtliche Verbindung aus einer Platte (24) besteht, wobei die beiden Flächen dieser Platte mit einem Werkstoff versehen sind, der mit dem besagten thermoplastischen Werkstoff auf den Außenflächen des Behälters und des Deckels geschweißt werden kann, wobei diese Platte auf den besagten zylindrischen Oberflächen des Behälters und des Deckels geschweißt ist.

3. Verpackung gemäß Anspruch 2, dadurch gekennzeichnet, daß sie Schuhe (21, 22) enthält, die jeweils die zylindrischen Oberflächen des Behälters und des Deckels verlängern, wobei die besagte Platte (24) auf den nebeneinander stehenden Schuhen (21, 22) geschweißt ist, wobei ein ununterbrochener Bereich als Verbindung des Deckels mit dem Behälter gebildet wird.

4. Verpackung gemäß Anspruch 2, dadurch gekennzeichnet, daß der Deckel (217) und der Behälter (210) aus einem einzigen geformten, geblasenen oder warmgeformten Teil bestehen, der mit einem Schlitz (215) oder einem Einschnitt versehen ist, der auf einem Teil ihres Umfangs die besagten zylindrischen Oberflächen trennt.

5. Verpackung gemäß Anspruch 2, dadurch gekennzeichnet, daß der Deckel eine Öffnung aufweist, die durch einen Verschlußteil (230) verschlossen ist, der aus einem Werkstoff besteht, der für Gase und Dämpfe undurchlässig ist, und an diesem Deckel geschweißt ist.

6. Verpackung gemäß Anspruch 2, dadurch gekennzeichnet, daß der Behälter an seinem unteren Teil gegenüber dem Deckel eine Öffnung aufweist, die durch einen Verschlußteil (254) verschlossen ist, der an diesem Behälter geschweißt ist.

7. Verpackung gemäß Anspruch 1, dadurch gekennzeichnet, daß eines der freien Enden (30) des Streifens (13) zwei symmetrische Aussparungen (31, 31') enthält und daß das andere freie Ende (32) an die besagte Oberfläche der örtlichen Verbindung durch diese Aussparungen geschweißt ist.

8. Verpackung gemäß Anspruch 1, dadurch gekennzeichnet, daß eines der Enden des Streifens (13) auf der Oberfläche der besagten örtlichen Verbindung geschweißt ist und daß das andere Ende des Streifens (13) ein freies Stück enthält, das mindestens teilweise das geschweißte Ende überlagert.

9. Verpackung gemäß Anspruch 1, dadurch gekennzeichnet, daß die Innenschicht aus thermoplastischem Werkstoff des biegsamen Streifens (13) mit einem mehrschichtigen Gefüge einen mittleren Einschnitt enthält.

10. Verpackung gemäß Anspruch 1, dadurch gekennzeichnet, daß der biegsame Streifen (13) mit einem mehrschichtigen Gefüge ein Aufreißband enthält, das mit seiner Außenfläche verbunden ist.

11. Verpackung gemäß Anspruch 1, bei der der Deckel in seinem mittleren Teil ein hohles Profil aufweist und um diesen hohlen mittleren Teil eine seitliche Wand enthält, von der die Außenfläche der Innenfläche der seitlichen Wand des Behälters entspricht, um an dem oberen Teil des Behälters ein Hineinstecken des Deckels in den Behälter zu ermöglichen, dadurch gekennzeichnet, daß die Tiefe des hohlen Profils des Deckels, die von der oberen Kante des Behälters gemessen wird, größer als die Tiefe von der mittleren Linie des biegsamen Streifens (13) ist, der an den besagten zylindrischen Oberflächen (10, 11) befestigt ist, wobei diese Tiefe ebenfalls von der oberen Kante des Behälters gemessen wird.

12. Verpackung gemäß Anspruch 8, dadurch gekennzeichnet, daß sie einen ringförmigen freien Raum (12) zwischen den besagten zylindrischen Oberflächen enthält, der nach innen durch die Wandungen des Deckels und des Behälters, die miteinander in Berührung stehen, und nach außen durch den besagten biegsamen Streifen, der an den besagten zylindrischen Oberflächen befestigt ist, begrenzt ist.

13. Verpackung gemäß Anspruch 12, dadurch gekennzeichnet, daß der besagte ringförmige Raum aus einer ringförmigen Aussparung besteht, die in dem Bereich der Verbindung zwischen der Außenfläche der seitlichen Wandung des Deckels und der oberen Kante (3) des Behälters (1) ausgeführt ist.

14. Verpackung gemäß Anspruch 1, bei dem der Behälter (1) aus zwei steckbaren Teilen (1, 131) besteht und der Deckel (29) ausgelegt ist, um auf dem oberen Teil (131) gesteckt zu werden, derart zur Abgrenzung von zwei getrennten Abteilen (132, 133), wobei der erste Teil (1) eine erste zylindrische Oberfläche (11), der zweite Teil (131) eine zweite zylindrische Oberfläche (135) und der dritte Teil (29) eine dritte zylindrische Oberfläche (10) enthält, dadurch gekennzeichnet, daß diese drei zylindrischen Oberflächen (10, 135, 11) durch einen einzigen biegsamen Streifen (13) um die gesamte Verpackung gleichzeitig geschweißt sind.

15. Verfahren zur Herstellung der Verpackung gemäß den Ansprüchen 1 und 2, bei dem diese Verpackung geschlossen wird, wobei der Behälter (1) vorher gefüllt wurde, indem der Deckel mit Hilfe eines Rahmens kräftig auf den Behälter gedrückt wird, der mindestens teilweise in das hohle Profil des Deckels eingeführt ist, und einer Abstützung, die den Behälter hält, und in dem der biegsame Streifen (13) auf dem Umfang der besagten zylindrischen Außenflächen (10, 11) geschweißt wird, indem er kräftig gegen diese Außenflächen gedrückt wird mit Hilfe eines Werkzeugs (18) das auf eine ausreichende Temperatur erwärmt wurde, um das Verschweißen des thermoplastischen schweißfähigen Werkstoffs des biegsamen Streifens mit dem thermoplastischen schweißfähigen Werkstoff der zylindrischen Außenflächen sicherzustellen, dadurch gekennzeichnet, daß der ringförmige Raum mit einem Strahl von Wasser und/oder Dampf gereinigt wird, nachdem der Behälter (1) und der Deckel (2) geschlossen wurden und bevor der biegsame Streifen (13) auf den zylindrischen Außenflächen (10, 11) geschweißt wird.

16. Verfahren zur Herstellung der Verpackung gemäß den Ansprüchen 1 und 2, bei dem der Behälter mit einer Öffnung und einem Verschlußteil versehen ist, der für eine Schweißung an dem Behälter nach Füllung des Behälters ausgelegt ist, bei dem vor dem Füllen des Behälters auf mindestens einen Teil des Umfangs des oberen Teils des Behälters ein Bereich von geringerer Festigkeit (215) vorsieht und dieser Bereich von geringerer Festigkeit mit Hilfe eines biegsamen, abnehmbaren und dichten Streifens (228) verschlossen wird, der an der Außenwand des Behälters geschweißt wird, und bei dem nach dem Füllen des Behälters der Verschlußteil geschweißt wird, dadurch gekennzeichnet, daß der Bereich von geringerer Festigkeit in dem Behälter bei seiner Herstellung und/oder seiner Formgebung durch Einspritzen oder Einblasen von Kunststoff angefertigt wird.

17. Verfahren gemäß Anspruch 16, dadurch gekennzeichnet, daß der Bereich von geringerer Festigkeit (215) in dem Behälter nach der Herstellung und/oder der Formgebung des Behälters durch Warmformung angefertigt wird.

18. Verfahren gemäß Anspruch 16, dadurch gekennzeichnet, daß der Bereich von geringerer Festigkeit angefertigt wird, indem ein Schlitz (215) auf mindestens einem Teil des Umfangs des Behälters (210) ausgeführt wird.

19. Verfahren gemäß Anspruch 18, dadurch gekennzeichnet, daß der Schlitz (215) durch Sägen, Fräsen, Schleifen, Bearbeitung mit Druckstrahl und/oder mit Laser ausgeführt wird.

**Claims**

1. Sealed package comprising a container (1) having an opening and a cover (2) which are made of a synthetic moulded, blowed or thermoformed material, the external faces of this container and this cover being made of a thermoplastic material and having cylindrical surfaces flushed to each other, and a flexible detachable strip sealed on said cylindrical surfaces to hold the cover on the container, said flexible strip being multilayered with an internal surface made of a thermoplastic material sealable to said synthetic material and having at least one intermediate layer made of an impervious material for gas and vapour, and being sealed to the container and to the cover along two parallel closed loop-shaped sealing zone extending without interruption on said cylindrical surfaces, characterized in that these cylindrical surfaces are provided each on at a part of their circumference with an outwardly extending beak-like projections (33), the edges (36, 37) of which being flushed to each other perpendicularly to the axis of the flexible strip (13) and in that the two ends of this flexible strip are sealed back to back to the end of said edges (36, 37).

2. Sealed package comprising a container (210, 225) having an opening and a cover (217, 229, 230) which are made of an synthetic moulded, blowed or thermoformed material, the external faces of this container and this cover being made of a thermoplastic material and having cylindrical surfaces flushed to each other, characterized in that the cover (217) is integral with the container (210) through an annular joining of their faces, the joining zone being limited by a peripheral groove (215, 227) separating said cylindrical surfaces and interrupted by a local joigning, said local joigning being provided with a square element (24) having two faces coated with a material sealable to said thermoplastic material coating the external faces of the container and of the cover, this square element being sealed on said cylindrical surfaces of the container and the cover.

3. Package according to claim 2, characterized in that it comprises supports (21, 22) respectively flushing with cylindrical surfaces of the container and of the cover, said square element (24) being sealed on said juxtaposed supports (21, 22) and making an ininterrupted zone joigning the cover to the container.

4. Package according to claim 2, characterized in that the cover (217) and the container (210) are made of a same moulded, blowed or thermoformed element provided with a slot (215) or a groove separating said cylindrical surfaces on a part of their circumference.

5. Package according to claim 2, characterized in that the cover comprises an opening closed by a closing element (230) made of an impervious material for gas and vapour, sealed to this cover.

6. Package according to claim 2, characterized in that the container (252) is provided, at its lower part opposite to the cover, with an opening closed by a closing element (254) sealed to this container.

7. Package according to claim 1, characterized in that one of the free ends (30) of the strip (13) comprises two symetrical recesses (31, 311), and in that the other end (32) of the strip is sealed to said local joigning surface through said recesses.

8. Package according to claim 1, characterized in that one of the ends of the strip (13) is sealed on the surface of said local joigning, and in that the other end of this strip (13) comprises a free length which at least partially overlaps the sealed end.

9. Package according to claim 1, characterized in that the inner layer of the multilayered flexible strip (13) made of thermoplastic material comprises a central groove.

10. Package according to claim 1, characterized in that the multilayered flexible strip (13) comprises a narrow strip to be pulled off which is integral with the external surface.

11. Package according to claim 1, in which the cover has a hollow structure in its central portion and comprises around this portion a side wall whose exterior surface matches the interior surface of the side wall of the container such that the cover may be encased into the upper portion of the container, characterized in that the depth of the hollow of the cover (2) measured from the upper rim of the container is superior to the depth of the central line of the flexible strip (13) sealed to said cylindrical surfaces (10, 11) this depth being measured from the inner rim of the container.

12. Package according to claim 8, characterized in that it comprises a free annular portion (12) provided between said cylindrical surfaces included between the faces of the cover and of the container when they are in contact with each other and said flexible strip sealed to said cylindrical surfaces.

13. Package according to claim 12, characterized in that said annular portion is defined by an annular recess (101) provided in the connection zone between the external surface of the side wall of the cover and the upper rim (3) of the container (1).

14. Package according to claim 1, in which the container (1) comprises two fitting elements (1, 131) and the cover (29) can be fitted with the upper element (131) in order to delimitate two separated partitions (132, 133), the first element (1) comprising a first cylindrical surface (11), the second element (131) comprising a second cylindrical surface (135) and the third element (2) comprising a third cylindrical surface (10), characterized in that these three cylindrical surfaces (10, 135, 11) are simultaneously sealed by the same flexible strip (13) rouding all the package.

15. Process of manufacturing of the package according to claims 1 and 2, in which this package is closed, after previous filling of the container (1) whereby the cover (2) is pressed onto the container by means of a stamp engaging the hollow portion of the cover and a support maintaining the container, and in that the flexible strip (13) is sealed around said cylindrical surfaces (10, 11) by applying a force against these surfaces by means of a tool (18) kept to a sufficient temperature to assure the connection of the thermoplastic sealable material of the flexible strip with the thermoplastic sealable material of cylindrical surfaces, characterized in that the annular portion (12) is cleaned by a jet of water and/or vapour after the container (1) and the cover (2) have been closed but before the flexible strip (13) has been sealed onto the cylindrical surfaces (10, 11).

16. Process of manufacturing of the package according to claims 1 and 2, in which the container is provided with an opening and a closing element sealable to the container after its filling, in which, before the filling of the container, a zone of decreases resistance (215) is provided on at least one part of the upper circumference of this container, and this zone of decreased resistance is closed by a flexible detachable tight strip (228) welded on the side wall of the container and in that the closing element is welded to the container after its filling, characterized in that the decreased zone is realized in the container during its manufacturing and/or the shaping operation by moulding, injection or blow-moulding of synthetic material.

17. Process according to claim 16, characterized in that the decreased zone (215) is realized in the container after the manufacturing or the shaping operation of the container by thermoforming.

18. Process according to claim 16, characterized in that the decreased zone is obtained by a slit (215) provided on at least a part of the circumference of the container (210).

19. Process according to claim 18, characterized in that the slit (215) is realized by sawing, milling, grinding, machining by means of fluid jet under pressure or by laser beam.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 24

FIG. 23

FIG. 25

FIG. 26